# NEUE EUROPÄISCHE PATENTSCHRIFT

(11) **EP 1 907 906 B2**
(45) Veröffentlichungstag und Bekanntmachung des Hinweises auf die Entscheidung über den Einspruch: **10.10.2018**
(45) Hinweis auf die Patenterteilung: 18.03.2015
(21) Anmeldenummer: 06741674.3
(22) Anmeldetag: 30.06.2006
(51) Int. Cl.: G05B 19/409

(54) **VERFAHREN UND STEUERVORRICHTUNG ZUR STEUERUNG EINER ODER MEHRERER MASCHINEN**
METHOD AND CONTROL DEVICE FOR CONTROLLING ONE OR SEVERAL MACHINES
PROCEDE ET DISPOSITIF DE COMMANDE PERMETTANT DE COMMANDER UNE OU PLUSIEURS MACHINES

(30) Priorität: 18.07.2005 CH 11882005; 10.09.2005 CH 14722005; 15.04.2006 CH 629062006
(43) Veröffentlichungstag der Anmeldung: 09.04.2008
(73) Patentinhaber: Netstal-Maschinen AG, 8752 Näfels (CH)
(72) Erfinder: WERFELI, Friedrich, CH-8762 Schwändi (CH)
(74) Vertreter: Wilhelm, Ludwig
(86) Internationale Anmeldenummer: PCT/CH2006/000349
(87) Internationale Veröffentlichungsnummer: WO 2007/025396

(56) Entgegenhaltungen:
- EP-A1- 0 573 912
- WO-A-01/67191
- WO-A-2005/029983
- WO-A1-01/96969
- WO-A1-2005/009719
- WO-A1-2007/025396
- WO-A2-2005/050428
- DE-U1- 20 007 972
- US-A- 6 129 449
- US-A1- 2004 090 428
- US-B1- 6 437 774
- Betriebsanleitung für Maschinennummer 193077 der Arburg GmbH+Co KG, 08 März 2004, Seiten 113-195

## Beschreibung

### Technisches Gebiet

Die Erfindung betrifft ferner eine Steuervorrichtung für das Steuern einer oder mehrerer Maschinen bzw. einer Produktionszelle mit zyklisch repetierbaren Abläufen, insbesondere für die Herstellung von Massenteilen mit einer Maschinensteuerung sowie einer Bedieneinheit, ausgebildet als Mensch-Maschinen-Interface (MMI), wobei die Maschinenabläufe und Produktionsparameter an der Bedieneinheit durch den Menschen bzw. Bediener bildschirmunterstützt eingebbar und veränderbar sind, wobei die Bedieneinheit wenigstens ein Programmier-Bedienfeld und ein operatives Bedienfeld aufweisen.

### Stand der Technik

Die Steuerung von Maschinen und Vorrichtungen, insbesondere einer Produktionszelle mit zyklisch repetierbaren Abläufen für die Herstellung von Massenteilen, stellt eine grosse Zahl an Grundanforderungen:
- In der Regel wird eine Maschinensteuerung, sei es mit einer speicherprogrammierbaren Steuerung (SPS) oder mit einem Industrie-PC, verwendet. Die Steuerteile sind abgesehen von Bildschirm und PC in einem Schaltschrank eingebaut. Im Schaltschrank befinden ferner Umrichter die Steuerung einzelner Regler sowie Hochleistungsprozessorkarten für die Hauptachsen der Maschine und alle elektrischen/elektronischen Hilfseinrichtungen und Hauptschalter für die Stromzufuhr.
- Bei neueren Maschinen insbesondere bei Spritz- oder Druckgiessmaschinen kommen Steueraufgaben für Hilfsvorrichtungen, wie Zu- und Abfuhr, Entnahmeroboter, Nachkühleinrichtungen, usw. hinzu.
- Der Bediener muss für zyklisch repetierbare Abläufe in der Lage sein, den Ablauf festzulegen und die Produktionsparameter einzugeben und zu verändern, wozu in der Praxis eine gesonderte Bedieneinheit verwendet wird.
- Die Bedieneinheit hat eine Mehrfachfunktion und wird als Mensch-Maschinen-Interface, abgekürzt MMI, bezeichnet und kann eigene Rechner- und Speicher aufweisen.
- Ein unentbehrlicher Bestandteil der MMI ist ein Bildschirm, an dem übersichtlich die Komponenten der Maschine, deren Prozessabläufe und die Prozessparameter dargestellt werden.

In der Folge wird als bevorzugtes Beispiel auf den Bereich von Spritzgiessmaschinen Bezug genommen. Für die Steuerung von Spritzgiessmaschinen kommt eine weitere wichtige Grundforderung hinzu, nämlich eine freie Programmierbarkeit, der Konfiguration des Ablaufes eines Spritzgiessprozesses. Mit einer Spritzgiessmaschine werden in aller Regel unterschiedliche Spritzteile hergestellt. Für jedes unterschiedliche Spritzteil muss ein gesondertes Spritzgiesswerkzeug eingesetzt werden. Je nach Komplexität des Spritzteils sind beispielsweise ein oder mehrere Kernzüge, ferner Ausstoss- und Entnahmehilfen und Peripheriegeräte erforderlich. Als Folge müssen für jeden neuen Spritzgiessauftrag die Maschinenabläufe neu programmiert werden. Die Ablaufprogrammierung sowie die Parametrierung erfolgt normalerweise über die Bedieneinheit an der Maschine selbst.

Eine bekannte Lösung dafür ist in der EP 0 573 912 beschrieben. Bei dem Verfahren zur Steuerung einer Kunststoff-Spritzgiessmaschine werden in einer den Bediener führenden Form die für den Ablauf eines Spritzzyklus erforderlichen Betriebsparameter über eine Eingabeeinheit in eine diese Betriebsparameter speichernde Datenverarbeitungseinheit eingegeben. Bei der Eingabe für das Einrichten des Spritzwerkzeuges wird für den Ablauf und die Konfiguration des Spritzzyklus in Kenntnis des physikalisch und des maschinenseitig und werkzeugseitig konstruktiv bedingt möglichen Verfahrensablaufes von Spritzzyklen dem Bediener eine selektive Auswahl an Eingabemöglichkeiten zur Verfügung gestellt. Dadurch können die zum Einrichten der Spritzgiessmaschine notwendigen Parameter schneller und fehlerfrei eingegeben werden. Nach der Ersteingabe für einen vollständigen Spritzzyklus werden ein oder mehrere Spritzzyklen auf Grund der gespeicherten Betriebsparameter durchgeführt und die Einstellungen je nach Erfordernis für eine anschliessende automatische Produktion der Spritzteile optimiert.

Wird ein neues Spritzwerkzeug das erste Mal in Betrieb genommen, dann geht der Bediener nach einem Betriebsmodus "Einrichten" vor. Dabei kann der Einrichter schrittweise vorgehen und entsprechend Teile des Ablaufes mit den dafür erforderlichen Parametern programmieren und entsprechend schrittweise die Bewegungsabläufe ohne Spritzmaterial vorsichtig aktivieren. Für diesen Zweck muss er am Bedienterminal die entsprechenden operativen Tasten drücken und mit dem Auge mit voller Aufmerksamkeit die Bewegungsabläufe der aktivierten Komponenten der Maschine beobachten. Aus diesen Ausführungen ergeben sich zwei unterschiedliche Bedienarten:
- Programmiereingaben am Bildschirm, bei denen das Auge immer auf den Bildschirm fixiert ist: Die Eingabe geschieht durch ein Pointingdevice, mit dem eine Marke auf dem Bildschirm verschoben wird, deren Positionierung die Eingabe bestimmt. Das Feedback geschieht optisch am Bildschirm. Als Pointingdevices sind bekannt: Kursortasten, Maus, Trackball, Touchscreen, Touchpad, Scrollrad und Joystick. Wenn eine Anwendung ausschliesslich auf bildschirmzentrierte Eingaben angewiesen ist, hat sich heute am Markt ein Touchscreen-Bildschirm stark verbreitet. Bei komplexeren Funktionen, wie drag and drop, Verschieben von Elementen, oder Anwahl einer Anzahl Elemente aus vielen, ist die Mouse oder der Trackball immer noch ungeschlagen. Bei Spritzgiessmaschinen betrifft dies alle Programmierarbeiten, die Navigation und die Systemeinstellungen. Bei Programmiereingaben am Bildschirm spricht man von Bedienen am Sichtfeld. Ein Touchscreen ist über die Bildfläche manipulierbar. Es ist ein bedienbarer Bildschirm.
- Operative Befehle an die Maschine, bei der das Auge immer auf ein Maschinenteil gerichtet ist: Für diese Funktionalität können die bekannten Pointingdevices aus naheliegenden Gründen nicht verwendet werden. Als Eingabemittel haben sich bei Spritzgiessmaschinen bis heute mechanische Tasten und Drehschalter/Knebelschalter mit zwei Aktivierungsrichtungen durchgesetzt. Es braucht ein Feedback, ob der Aktuator betätigt ist. Dieser muss taktil sein. Das optische Feedback kann nicht gesehen werden, da der Bediener auf die Maschine blickt. Das akustische Feedback, das in anderen Industrieanwendungen häufig verwendet wird, ist im Umfeld von Spritzgiessmaschinen nicht geeignet, da der Lärmpegel zu hoch ist.

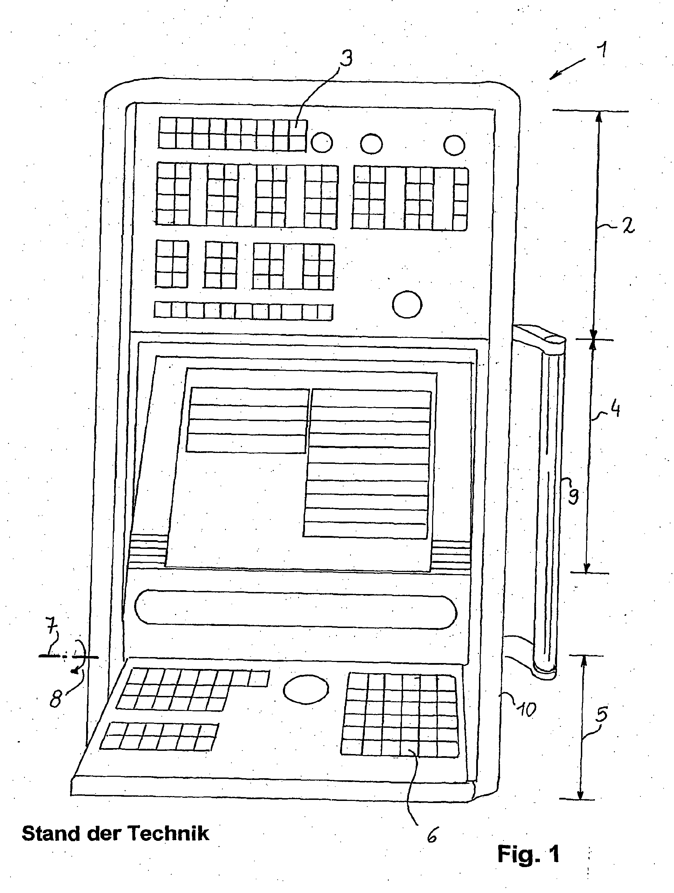

Die Figur 1 zeigt eine Bedieneinheit 1 des Standes der Technik, wie sie von der Anmelderin hergestellt wird. Der oberste Sektor zeigt ein oberstes Bedienfeld 2 mit einer grossen Anzahl mechanischer Tasten 3, welche jeweils entsprechend ihrer Funktion mit einem fest zugeordneten Symbol für operative Eingriffe versehen sind. Der mittlere Sektor ist ein Bildschirm 4 mit einer Zustandsanzeige für einzelne Komponenten der Maschine und für die Ist-Zustände bezüglich der Prozessparameter. Auf dem Bildschirm 4 können beliebige Darstellungen, Schemen und Prozessabläufe aufgerufen und angezeigt werden. Der Aufruf erfolgt durch entsprechende Tasten des untersten Bildschirmbedienfeldes bzw. der Tastatur 5. Der unterste Sektor der Figur 1 zeigt das Bedienfeld 5 für die Eingabe der Parameterwerte mit klassischen mechanischen Tasten. Die Tastatur 5 ist über eine horizontale Achse 7 auf- und abklappbar (Pfeil 8). Dies erlaubt, analog zu einer Schreibmaschinentastatur mit den Fingern die einzelnen Eingabetasten 6 zu bedienen. Die ganze Bedieneinheit ist nach den Gesichtspunkten der Ergonomie konzipiert und als Ganzes mittels eines Handgriffes 9 in der Höhe verstellbar. Der Bildschirm 4 soll etwa auf Augenhöhe entsprechend der Grösse des jeweiligen Bedieners und das Bedienfeld 5 mit den mechanischen Tasten auf bequeme Lage und Höhe für Handeingaben gesetzt werden können.

Die WO01/969 zeigt eine weitere Lösung des Standes der Technik für eine Bedieneinheit zu einer Spritzgiessmaschine. Diese zeigt einen Touchscreen, um den herum mechanische Tasten angeordnet sind, welche in die Regionen A - E aufgeteilt werden. Die Symbole sind am Rand des Bildschirmes dargestellt. Diese Lösung ist im Zusammenhang mit dem situativen Wechsel der Darstellung geeignet. Diese Bedienung ist eine Verbesserung gegenüber den zuvor beschriebenen Lösungen, da weniger Tasten gebraucht werden. Bei der Lösung fällt man jedoch beim Bedienen immer wieder darauf herein, dass man irrtümlich das Symbol am Bildschirm drückt statt die Taste daneben. Die eigentliche Bedienung erfolgt auf dem Touchscreen. Unterhalb des Bildschirms sind zwei Reihen mechanischer Tasten angeordnet.

Ein grosser Nachteil, der die mechanischen Tasten begleitet, ist deren Dedizierung. Jede Taste hat eine Beschriftung, die deren Zweck beschreibt. Da diese Beschriftung fix ist, kann die Taste nur für eine Funktion gebraucht werden. Es gibt verschiedene Versuche, um diesen Nachteil zu beseitigen:
- Firmen, die Standardterminals liefern, bieten oft die Möglichkeit, Folien oder Masken hinter die Folientasten zu schieben und so pro Maschine oder Baureihe eine individuelle Beschriftung zu erhalten. Wichtig ist hierbei, dass die Folie mit der Software übereinstimmt. Die Beschriftung bleibt aber für diese Maschine fix und kann nicht situativ ändern.
- Häufig werden für Sonderlösungen zusätzliche Tastenfunktionen benötigt. Diese werden oft mittels Folien realisiert, die unter standardmässig vorhandene Tasten ohne Symbole geschoben werden.
- Die Funktion wird durch eine Kombination von Tasten ausgelöst. Dies ist zwar möglich, wirkt aber für eine Handbedienung umständlich.

Als Lösung wird vorgeschlagen, dass die Bedienvorrichtung ein Betätigungselement mit einer Führung für den Betätigungsvorgang umfasst, dem mittels der Bedienoberfläche eine Mehrzahl von Bedientätigkeiten zuordenbar ist, so dass infolge der geführten Betätigung des Betätigungselements eine jeweils zugeordnete Bedientätigkeit ausführbar ist.

Es wurde erkannt, dass bei der Bedienung Maschinen der tabakverarbeitenden Industrie mittels eines berührungsempfindlichen Bildschirms (Touchscreen) der Bediener seine Aufmerksamkeit in der Regel ständig auf den Bildschirm richten muss. Gelegentlich ist jedoch eine Bedienung ohne Sicht auf den Bildschirm erwünscht, beispielsweise um einen Teil der Maschine beobachten zu können. Da ein Touchscreen keine Führung für die Hand oder den Bedienfinger aufweist, kann es bei einer Blindbedienung der Maschine zu einem Verrutschen des Bedienfingers auf dem Bildschirm und daher zu Fehlbedienungen kommen. Das gleiche Problem tritt bei Verwendung einer Maus oder ähnlicher flächenbezogener Eingabemittel auf, abgesehen davon, dass eine Maus in einer rauhen industriellen Umgebung störanfällig ist. Eine bevorzugte Ausführung des Betätigungselementes ist ein sog. Joystick. Dieser ist zweidimensional bewegbar und hat daher einen grösseren Anwendungsbereich. Wichtig ist nur, dass der Joystick eine Führung für die Betätigung aufweist. Dies kann beispielsweise eine Führung für die Bewegung rechts / links und/oder für die Bewegung oben/unten sein. Führung bedeutet daher keine eindimensionale Zwangsbewegung, sondern dass bei Betätigung des Betätigungselementes mindestens eine Vorzugsrichtung für den Bediener spürbar ist. Bedeutend für den Erfolg ist, dass das Betätigungselement nicht nur einer einzelnen Bedientätigkeit fest zugeordnet, sondern einer Mehrzahl von Bedientätigkeiten zuordenbar ist. Es handelt sich also um ein Universalbedienelement. Dies unterscheidet die Erfindung von Lösungen, bei denen einzelne Bedientätigkeiten jeweils einer entsprechenden Bedieneinrichtung (Schalter, Drehsteller oder dergleichen) zugeordnet sind. Es wird eine Vielzahl von einzelnen Bedienelementen und die damit verbundene Unübersichtlichkeit vermieden.

Die WO01/67191 zeigt eine Vorrichtung zur Bedienung, Beobachtung und/oder Überwachung einer Fertigungsvorrichtung z.B. einer Spritzgiessmaschine mit ersten Mitteln zum Speichern von Eingabe und / oder Anzeigeseiten in einer Baumstruktur. Dabei ist vorgesehen, mit einem ersten Bedienelement zum Aufruf einer Seite einer ersten Hierarchie-Ebene und zum Aufruf von zumindest einer untergeordneten Seite einer zweiten Hierarchie-Ebene, mit zweiten Mitteln zum Speichern eines in der Baumstruktur durch Aufruf von Seiten zurückgelegten Pfades und ferner mit einem zweiten Bedienelement zum schrittweisen Zurückgehen des Pfades.

Für das erste Bedienelement werden ein oder mehrere Softkeys, Hotkeys oder Touchscreen-Tasten vorgeschlagen. Eine strenge Aufteilung in die beiden Funktionen:
- die Festlegung des Ablaufes bzw. der Konfiguration des Spritzzyklus sowie
- der operativen Befehle für die Maschine
ist nicht vorgesehen. Das gleiche trifft bei der WO2005/029983 zu. Die WO2005/029983 geht aus von einer Bedieneinheit für eine Maschine der tabakverarbeitenden Industrie, mit einer Bedienvorrichtung, die einen berührungsempfindlichen Bildschirm zur Darstellung und Betätigung einer graphischen Bedienoberfläche umfasst, und mit einer Bedienoberflächen-Steuerungseinrichtung, die zur Steuerung der graphischen Bedienoberfläche eingerichtet ist. Die Aufgabe wurde darin gesehen, dass die Bedienung einer Bedieneinheit für eine Maschine der tabakverarbeitenden Industrie zu vereinfachen und zu verbessern, sowie insbesondere die Gefahr von Fehlbedienungen bei Blindbedienung der Bedienvorrichtung zu reduzieren.

Eine bevorzugte Form des Betätigungselementes ist ein Drehbetätigungselement. Die Drehung des Drehbetätigungselementes durch den Bediener im Uhrzeigersinn oder im Gegenuhrzeigersinn stellt eine eindimensionale Bewegung dar und lässt daher keine flächenhafte Bewegungsfreiheit. Vorzugsweise ist daher das Betätigungselement nur eindimensional bewegbar. Dies kann beispielsweise bei einem Drehbetätigungselement durch räumliche Festlegung der Drehachse erreicht werden. Daher kann das Betätigungselement beispielsweise auch ein kugelförmiges Element mit festgelegter Drehachse sein. Nachteilig ist, dass die Bedienoberfläche für jeden Maschinen-Typ wieder neu ausgelegt werden muss.

Der Erfindung wurde nun die Aufgabe gestellt, Lösungswege zu suchen, bei denen die beschriebenen Nachteile vermieden werden, welche jedoch alle Grundforderungen an ein Mensch-Maschinen-Interface (MMI) erfüllen:
- Bedienung mit Blick auf den Bildschirm,
- Bedienung mit Blick auf die Maschine und
- kostengünstige Basis-Lösung für unterschiedliche Maschinentypen,
- einfache, bequeme und rasch zu lernende Bedienung.

### Darstellung der Erfindung

Die erfindungsgemässe Steuervorrichtung ist durch die Merkmale des Anspruchs 1 gekennzeichnet.

Die zuvor beschriebene Lösung gemäss WO01/96969 zeigt eine Lösung mit einem einzigen Bildschirmbedienfeld, um das herum Tasten angeordnet sind. Für viele Anwender ist diese Lösung unpraktisch, wenn auch in mehreren Hinsichten eine Verbesserung erreicht wurde. Die bekannte Lösung der Anmelderin ist für einen gewohnten Anwender wegen der klaren Gliederung auf drei Bedienfeldern bequem zu bedienen. Der Nachteil dabei ist eine sehr grosse Anzahl Eingabestellen. Symbole für mechanische Tasten sind auf Touchscreen-Bildschirm, müssen aber mit zusätzlichen Tasten bedient werden.

Die neue Lösung konzentriert die Bedienung auf zwei intelligent ausgebildete Bildschirmbedienfelder, welche auf einem Datenaustausch in beiden Richtungen basiert. Das Programmier-Bedienfeld ist konzentriert für die bildschirmbezogene Eingaben und das operative Bedienfeld für die maschinenbezogenen Eingaben mit Blick auf die Maschine. Hinterlegt ist eine Software, welche für die Bildschirmkonfiguration automatisch entsprechende Eingabestellen auf dem operativen Bedienfeld aktiviert. Die neue Lösung eröffnet verschiedene überraschend vorteilhafte Ausgestaltungen, wie in der Folge noch ausgeführt wird:
- Klare und übersichtliche Funktionszuordnung für beide Bildschirmbedienfelder.
- Logische Trennung von der Programmarbeit am Bildschirm und der operativen Eingriffe an der Maschine. Bei der Arbeit am Bildschirm bleibt das Auge am Bildschirm. Für die operativen Eingriffe kann das operative Bedienfeld gleichsam für eine blinde Bedienung ausgestaltet werden.
- Massive Reduktion der Eingriffsstellen für das operative Bedienfeld, so dass dieses kleiner und einfacher gestaltbar ist.
- Möglichkeit einer einfachen Fernbedienung mittels eines mobilen Handsteuergerätes, da dieses nunmehr eine minimale Anzahl Tasten benötigt.

Für die besonders vorteilhaften Ausgestaltungen wird auf die Ansprüche 2 bis 17 Bezug genommen. Gemäss einer besonders vorteilhaften Ausgestaltung wird am Programmier-Bedienfeld die Ablaufprogrammierung für die Funktionen aller Komponenten der Maschine bzw. Vorrichtung durchgeführt und am operativen Bedienfeld zur Reduzierung der Eingabestellen ein Teil der Eingabestellen auf Grund entsprechender Programmierung und Anzeigen an den Eingabestellen mehrfach benutzt. Der Bediener spürt während der Ablaufprogrammierung und Parametrierung gar nicht, dass im Hintergrund bezüglich der einzelnen Komponenten die für operative Eingriffe notwendigen Eingabestellen für ihre Funktion vorbereitet werden, so dass am operativen Bedienfeld für die Parametrierung der einzelnen Komponenten und/oder die für die jeweils operativ zu beeinflussenden Komponenten benötigten Eingabestellen bei Aufruf einer Komponente auf dem Bildschirm automatisch aktiviert werden. Für den Bediener wird, sei es für das Einrichten eines Werkzeuges oder für operative Eingriffe, z.B. zur Optimierung der Prozessparameter, die Gesamtheit der dafür erforderlichen Informationen, mit Einschluss von aktuellen Prozessverläufen vor Augen geführt und mit der kleinstmöglichen Anzahl von Eingabestellen ein logischer und sicherer operativer Zugriff gegeben.

Gemäss einer weiteren besonders vorteilhaften Ausgestaltung wird ein Teil der Eingaben mit Blick auf den Bildschirm mittels Eingabestellen im Bereich des Programmier-Bedienfeldes und ein anderer Teil der Eingaben, insbesondere der operativen Eingaben, mit Blick auf die Maschine mittels sicht- und erfühlbaren Touchscreenstellen im Bereich des operativen Bedienfeldes gemacht. Vorteilhaft ist jedoch, wenn auch der Teil der Eingaben mit Blick auf den Bildschirm mittels Touchscreen-Eingabestellen gemacht wird. Ein Touchscreen hat den grösseren Vorteil, dass auf dem Bildschirmbild selbst an den dafür markierten Stellen Eingaben gemacht werden können, welche direkt für die dafür dargestellte Funktion sind. Die neue Lösung erlaubt jedoch, den Touchscreen im umgekehrten Sinne zu benutzen, indem auf der Eingabestelle die betreffende Funktion angezeigt wird. Werden nun zusätzlich die Touchscreenstellen im Bereich des operativen Bedienfeldes nicht nur sichtbar sondern durch entsprechende Profilgebung, z.B. durch vorstehende Umfassungsränder, auch erfühlbar gemacht, erleichtert dies das rasche Lernen der Bedienung. In der Anfangsphase kann sich der Bediener mit einem Blick versichern, dass er den Finger auf der richtigen Eingabestelle hat. Später wird er die Bedienung entsprechend dem Blindschreiben an der Schreibmaschine beherrschen. Weisen die Bildschirmbedienfelder 50 bis 100 Eingabestellen wie im Stand der Technik auf, ist ein "blindes" Bedienen ausgeschlossen.

Eine ganz besonders vorteilhafte Anwendung für die neue Erfindung betrifft Spritzgiessmaschinen, wobei diese Teil einer Produktionszelle für die zyklische Herstellung von Spritzteilen ist und vom Bediener der Produktionsablauf am Bildschirm im Bereich des Programmier-Bedienfeldes konfiguriert bzw. eingespielt wird. Vom Bediener wird der Produktionsablauf mittels einer speichernden Datenverarbeitungseinheit an der Bedieneinheit über Touchscreeneingaben im Bereich des Programmier-Bedienfeldes konfiguriert bzw. eingespielt. Die Betriebsparameter werden dabei vom operativen Bedienfeld aus in einer dafür vorbereiteten Maske des Programmier-Bedienfeldes eingegeben und geändert.

Es ergibt sich daraus eine scharfe logische Trennung der beiden Bildschirmbedienfelder. Das operative Bedienfeld gestattet keine Ablaufänderungen, da Ablaufänderungen einen völlig anderen Hintergrund haben, welcher dem Einrichter klar ist. Der Bediener in der Funktion als "Operator" hat diese Kenntnisse nicht. Deshalb sind ihm entsprechende Ablaufeingaben verwehrt. Ablauffehleingaben können nicht nur zu Betriebsstörungen, sondern auch zu Werkzeug- bzw. Maschinenschäden führen. Fehler bei Parametereingaben sind insofern unproblematisch, als eine Hintergrundprogrammierung für jeden Parameter obere und untere Grenzen festlegt.

Gemäss einer weiteren vorteilhaften Ausgestaltung weist die Maschinensteuerung Ereignisschnittstellen auf und stellt Steuerkommandos bzw. Steuerbefehle, z.B. für einzelne Komponenten, in Form einer Kommandoschnittstelle zur Verfügung. Für einen Betriebsmodus "Einrichten" erfolgt die Konfiguration des Produktionsablaufes über Touchscreeneingabestellen mit Blick auf den Bildschirm im Bereich des Programmier-Bedienfeldes und die Parametrierung sowie die Eingaben von Steuerkommandos bzw. Steuerbefehlen für die reale Bewegung der Komponenten der Produktionszelle über die sicht- und erfühlbaren Touchscreenstellen im Bereich des operativen Bedienfeldes. Für den Betriebsmodus "Automatischer Betrieb" erfolgen operative Eingaben und Steuerbefehle im Bereich des operativen Bedienfeldes. Korrekturen von Betriebsparametern werden im Programmier-Bedienfeld angezeigt und finden Eingang in die Speicherung. Als Parameter werden physikalische Grössen bzw. Parameter, z.B. Geschwindigkeit (V), Druck (P), Kraft (F) und Weg (S), im operativen Bedienfeld über "+" (Plus) Touchscreenstellen bzw. "-" (Minus) Touchscreenstellen eingegeben und erhöht oder erniedrigt. Der Bedieneinheit wird eine Software zugeordnet, zur Aus- oder Anwahl einzelner Komponentenschemen auf dem Programmier-Bedienfeld, wobei mit der Auswahl der Schemen automatisch nur dafür erforderliche sicht- und erfühlbare Touchscreentasten des operativen Bedienfeldes aktiviert werden, so dass mittels der aktivierten Tasten komponentenspezifische Eingaben gemacht werden können. Zumindest ein Teil der Touchscreenstellen im Bereich des operativen Bedienfeldes können eigenständige Touchscreensektoren sein, derart, dass zwei oder mehrere der betreffenden Touchscreenstellen gleichzeitig betätigt werden können.

Unter Tasten werden normalerweise mechanische Tasten verstanden, wobei durch in der Regel durch Drücken mit einem Finger ein Eingriff vorgenommen wird. Im Falle von elektrischen Einrichtungen wird entsprechend eine Schaltfunktion ausgelöst. Dazu gibt es eine Vielzahl an Ausgestaltungen, z.B. Drucktasten, Kippschalter, Schieber, symbolisierte oder virtuelle Tasten am Bildschirm. Unter Bildschirmbedienfeld wird die vordere Oberfläche eines Bedienkastens verstanden, welcher in der Regel in der Nähe der Haupteingriffe an der Maschine selbst angeordnet wird und der direkten Bedienung dient. Im Unterschied dazu ist der Schaltschrank, der viel grössere Abmessungen hat, meistens neben der Maschine, oft auch an einer Wand, platziert.

Wie bereits dargestellt, wird gemäss der neuen Lösung nur eine beschränkte Zahl von sicht- und erfühlbaren Touchscreenstellen bzw. Tasten physikalisch vorgegeben. Mit programmunterstützten Symboldarstellungen auf den Touchscreenstellen bzw. Tasten und entsprechenden Funktionsverbindungen können die selben Touchscreenstellen bzw. Tasten für die Steuerung anderer Komponenten und Funktionsverbindungen beliebig unterschiedlich verwendet werden. Daraus ergibt sich, dass das operative Bedienfeld eine beschränkte, relativ kleine Zahl von Eingabestellen aufweist. Ein Teil der Eingabestellen des operativen Bedienfeldes wird auf Grund entsprechender Programmierung für unterschiedliche Funktionen bzw. mehrfach benutzbar gemacht. Die je aktivierte Funktion wird automatisch an den Eingabestellen des operativen Bedienfeldes anzeigbar gemacht.

In einer ganz besonders vorteilhaften Ausgestaltung der Steuervorrichtung werden die Touchscreen-Eingabestellen im Programmier-Bedienfeld koordinatenbezogen und die Touchscreen-Eingabestellen des operativen Bedienfeldes sektorbezogen programmiert. Im Programmier-Bedienfeld sind die Eingabestellen bildbezogen und müssen passend zu dem Bild koordinatenbezogen programmiert werden. Anders ist die Situation für das operative Bedienfeld. Hier gibt es eine Anzahl örtlich fixierter Eingabestellen, die jedoch einzeln für je wechselnde Funktionen programmiert werden müssen. Dazu weist die Touchscreenfunktion eine Software auf, über welche automatisch die aktivierbaren sicht- und erfühlbaren Touchscreen-Eingabestellen mit den entsprechenden Symbolen aufgezeigbar und beleuchtbar sind.

Vorteilhafterweise ist auf dem Bildschirm des Programmier-Bedienfeldes eine Eingabemaske darstellbar, derart, dass auf der Bedieneroberfläche des Programmier-Bedienfeldes der Ablauf und die Parametrierung konfigurierbar und parametrierbar sind. Die Eingabemaske weist insbesondere ein Ablaufdarstellungsfeld, eine Komponentenliste der steuerbaren Maschinenkomponenten mit auswählbaren Kommandos und ferner ein Parametrierfeld auf. Die jeweils erforderlichen Tasten für die sicht- und erfühlbaren Touchscreen-Eingabestellen werden durch die Anwahl der Komponentenschematas oder der Parameteranzeigen auf dem Bildschirm für die sichtbaren Touchscreen-Eingabestellen automatisch mit den entsprechenden dafür notwendigen Funktionsverbindungen für die sicht- und erfühlbaren Touchscreen-Eingabestellen zugeschaltet und aktiviert. Der Bediener wird auf diese Weise direkt auf seine Einflussmöglichkeit gelenkt. Besonders vorteilhaft ist es, wenn die Touchscreentasten in dem Bereich der sicht- und erfühlbaren Touchscreen-Eingabestellen wenigstens eine dreifache Funktion aufweisen:
- eine Leuchtanzeige als Statusanzeige;
- Anzeigen eines Symboles in Bezug auf die durch die Tasten auszulösende Funktion bzw. die Bedeutung der Tastenfunktion;
- als Steuereingabe und Steuerbefehl für eine Aktivierung von Maschinenabläufen und / oder Änderung von Produktionsparametern.

Wenn der Bediener beispielsweise die Komponente Spritzaggregat auf dem Bildschirm des Programmier-Bedienfeldes aufgerufen hat und eine Verschiebung befehlen möchte, dann kann er im operativen Bedienfeld nicht aus Versehen eine Eingabetaste für das Formschliessen drücken. Diese steht nämlich in dieser Situation nicht zur Verfügung.

Vorzugsweise wird den Touchscreen-Eingabestellen ein taktiler Feedback zugeordnet zur sensorischen Bestätigung, dass ein Steuerbefehl tatsächlich eingegeben bzw. akzeptiert wird, wobei der taktile Feedback einzelnen Tasten, einzelnen Bedienfeldern oder einer ganzen Eingabeeinheit zugeordnet sein kann.

Die neue Erfindung bietet ganz verschiedene Ausgestaltungswege betreffend Bildschirm. So können die Touchscreenfelder innerhalb einer Bildschirmfläche angeordnet und die sicht- und erfühlbaren Touchscreen-Eingabestellen durch das Anbringen einer profilbildenden Maske gebildet werden. Dazu kann sich eine Maske über die ganze Bildschirmfläche erstrecken, wobei zumindest ein Teil des Touchscreenfeldes für die sichtbaren Tastscreen-Eingabestellen als unbedeckte Fenster oder als durchsichtige Schicht ausgebildet sein kann. Es ist ferner möglich, dass sich die Maske nur über das operative Bedienfeld erstreckt und in dem Bereich der einzelnen Tasten Öffnungen aufweist, welche durch Ausstanzen und/oder durch eine Klarsichtfolie gebildet sind. Der Öffnungsbereich um die Tastfläche kann geprägte Merkmale wie Ränder oder Erhebungen aufweisen.

Gemäss einem zweiten Ausgestaltungsgedanken ist das Programmier-Bedienfeld und das operative Bedienfeld auf je getrennten Bildschirmen angebracht. Besonders vorteilhaft werden dabei die Touchscreen-Eingabestellen des operative Bedienfeldes auf wenigstens zwei oder mehreren Bildschirmen oder je einem Bildschirm pro Touchscreen-Eingabestelle angeordnet. Dies erlaubt, wie weiter vorne ausgeführt, den Bildschirmaufbau so zu gestalten, dass die Touchscreen-Eingabestellen des operativen Bedienfeldes sektorbezogen programmiert sind. Die Steuerung erkennt, welche Eingabestelle betätigt wurde, so dass der Befehl richtig verarbeitet wird.

Ein weiterer ganz besonders vorteilhafter Lösungsweg liegt darin, dass das Programmier-Bedienfeld und das operative Bedienfeld oder zumindest in Teilfunktionen dupliziert als mobiles Handsteuergerät ausgebildet ist. Mit diesem Vorschlag kann ein schon lange bestehendes Bedürfnis befriedigt werden. Das Kernproblem jedes mobilen Handsteuergerätes besteht in der beschränkten Bedienerfläche einerseits und der Frage, welche Eingriffsmöglichkeiten über ein mobiles Handsteuergerät überhaupt sinnvoll sind. Hierzu ist mit der neuen Erfindung die Grundlage geschaffen worden.
Weil gemäss der neuen Lösung
a) ein Datenaustausch in beiden Richtungen erfolgt,
b) die Eingabestellen für operative Eingriffe so tief wie möglich gehalten werden und
c) die Parametrierung eine bildschirmbezogene Tätigkeit ist,
können mit wenigen Eingabestellen alle häufigen operativen Befehle sichergestellt werden. Bevorzugt wird das operative Bedienfeld ortsfest angeordnet. Das mobile Handsteuergerät kann für die Bedienung gesperrt werden, und/oder es kann bei Bedienung über das mobile Handgerät das ortsfest operative Bedienfeld eine Sperre aufweisen. Das mobile Handsteuergerät kann beispielsweise als Handy mit Bildschirm oder als PDA oder Smart-phone oder Laptop ausgebildet sein, wobei der Datenaustausch über Draht oder drahtlos oder über Funk oder IR oder IrDA oder Bluetooth oder Wireless USB oder WLAN B/G erfolgen kann. Am mobilen Handsteuergerät kann dank des Datenaustausches in beiden Richtungen z.B. ein Komponentenschema oder ein Funktionsverlauf innerhalb des Spritzprozesses auf den Kleinbildschirm aufgerufen und die erforderlichen operativen Befehle eingegeben werden. Alle Sicherheitsdispositive in der Steuerung bleiben voll erhalten, weil die Befehle des mobilen Handsteuergerätes über die Bedienereinheit laufen.

Gemäss einem weiteren Ausgestaltungsweg weist die Bedieneinheit einen Zusatzkasten auf, insbesondere für Einlesestellen und/oder Sicherheitsschalter und/oder für weitere Schnittstellen, wie ein Touchpad auf einem Laptop und/oder eine andere elektronische Steuereinheit mit Fernbedienung und/oder eine Not-/ Aus-Taste.

### Kurze Beschreibung der Erfindung

In der Folge wird die Erfindung an Hand einiger Ausführungsbeispiele mit weiteren Einzelheiten erklärt. Es zeigen:
- die Figur 1: eine Bedieneinheit des Standes der Technik;
- die Figur 2a: schematisch ein Beispiel für eine Bedieneroberfläche der neuen Lösung;
- die Figur 2b: ein weiteres Beispiel für die Bedieneroberfläche;
- die Figur 2c: die Figur 2b ergänzt mit einem Zusatzbedienfeld;
- die Figur 3: den Bildschirm des Programmier-Bedienfeldes der Figur 2 in grösserem Massstab;
- die Figur 4: Explosionsskizze der Bedieneroberfläche mit dem Programmier-Bedienfeld und dem operativen Bedienfeld auf einem Bildschirm;
- die Figur 5: Explosionsskizze der Bedieneroberfläche mit dem Programmier-Bedienfeld und dem operativen Bedienfeld mit unterschiedlichen Bedienfeldern;
- die Figuren 6a, 6b und 6c: drei Beispiele von konkreten Bildschirmgrössen mit der Anordnung des Programmier-Bedienfeldes und des operativen Bedienfeldes;
- die Figur 7: schematisch die Datenverbindungen für die ganze Steuerung einer Spritzgiessmaschine;
- die Figur 8: ein ganzes Konzept für ein Kontrollsystem für eine Spritzgiessmaschine, als geordnete Sammlung von Komponenten als Konzept für das Kontrollsystem;
- die Figur 9: die Schichtarchitektur der neuen Lösung (Layer Model);
- die Figur 10a: die erfndungsgemässe Lösung mit einem Handsteuergerät;
- die Figur 10b: die erfindungsgemässe Lösung mit einem Laptop bzw. Notebook.

### Wege und Ausführung der Erfindung

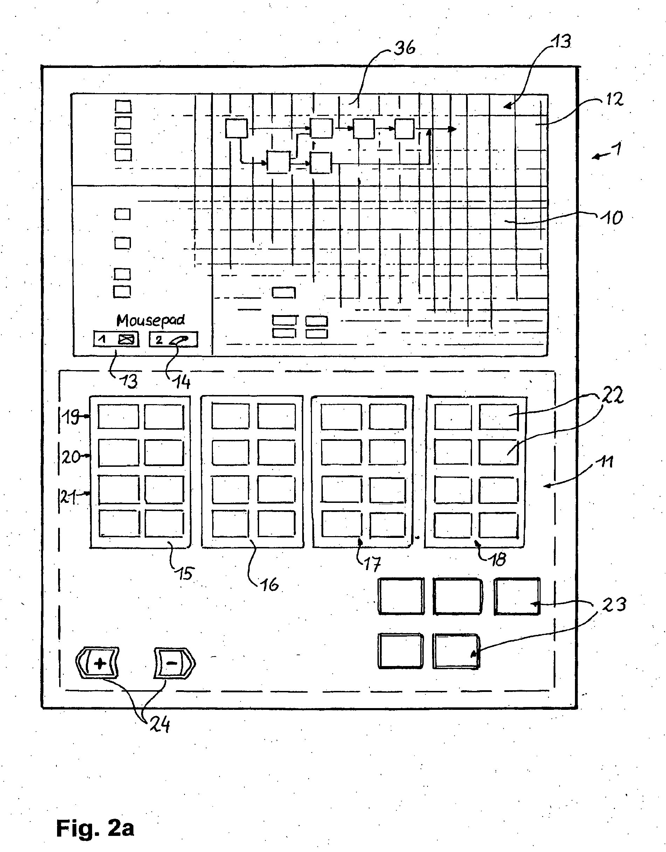

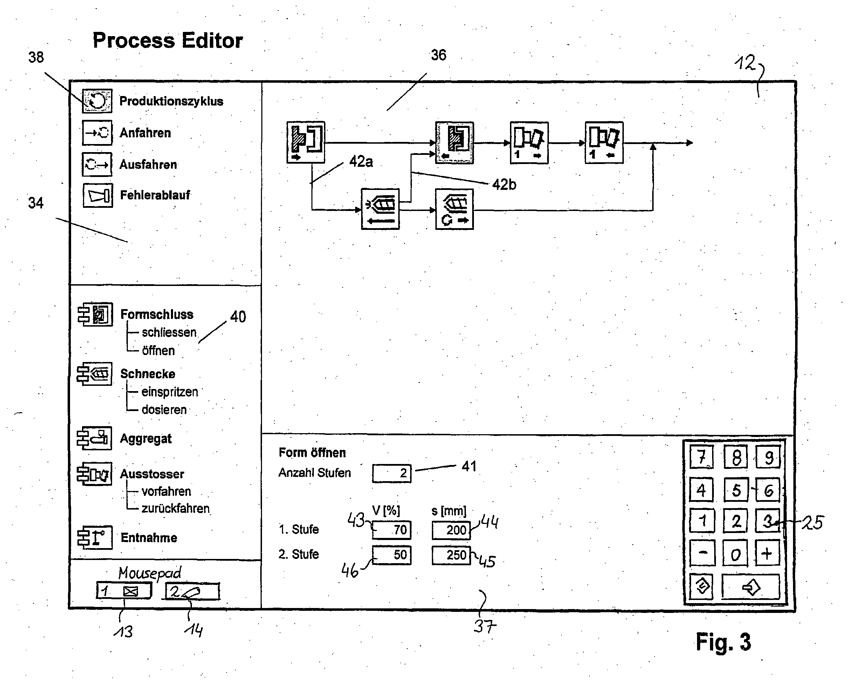

In der Folge wird nun auf die Figur 2a Bezug genommen, welche ein Beispiel für die erfindungsgemässe Lösung zeigt. Im oberen Bildteil ist das Programmier-Bedienfeld 10 dargestellt, welches mit strichpunktierter Linie eingefasst ist. Direkt darunter ist das operative Bedienfeld 11, welches mit strichlierter Linie eingerahmt ist. Das Programmier-Bedienfeld dient einerseits der bildmässigen Visualisierung, z.B. aller prozess- und maschinenrelevanten Daten, Ablaufdiagrammen und aktuellen Prozesszuständen. Ein wichtiger Teil des Programmier- Bedienfeldes 10 liegt in der Programmierung des Spritzgiessprozesses. Als Beispiel ist auf dem Bildschirm ein Prozesseditor, wie er in der Figur 3 in grösserem Massstab nochmals dargestellt ist. Der Bildschirm 12 des Programmier-Bedienfeldes 10 weist eine sensitive Oberfläche auf, welche erlaubt, die Eingabestellen koordinatenbezogen zu programmieren und entsprechend auf dem Touchscreenbildschirm direkt einzugeben. Symbolisch ist die sensitive Oberfläche mit dünnen Linien markiert. Das zweite operative Bedienfeld 11 weist unterschiedliche Eingabestellen auf.

Links unten auf dem Programmier-Bedienfeld sind zwei Schalter 13 und 14 für die Wahl von zwei Betriebsarten. Wahlschalter 14 ist die klassische Touchscreenfunktion für das Aktivieren von Tasten auf dem Programmier-Bedienfeld 10. Mit Wahlschalter 13 kann eine Mousepadfunktion als Ersatz für die klassische Mousefunktion gewählt werden. Dabei wird die wünschbare Eingabestelle durch Fahren mit dem Finger auf dem Bildschirm gemacht. Eine alternative Umschaltung geschieht automatisch mit der Umschaltung der Anwendung, z.B. mittels Betriebshandbuch mit Mouse-Bedienung.

Im operativen Bedienfeld 11 sind in der oberen Hälfte 4 Blöcke 15, 16, 17 und 18 dargestellt. Die Eingabestellen 19, 20 und 21 zeigen bereits konkrete Symbole Form Öffnen und Schliessen, Spritzteil auswerfen sowie Spritzdüsenverschiebung. Hierzu gibt es zwei Möglichkeiten. Die erste Möglichkeit liegt darin, dass einige wenige z.B. 4 bis 6 Eingabestellen mit konkreten Symbolen fix belegt sind. Es handelt sich um grundlegende Eingriffe wie:
- Form auf / zu,
- Ausstosser vor / rück,
- Aggregat verschieben,
- Schiebetür entriegeln.

Die Programmierung kann beim Maschinenhersteller erfolgen. Bei der Ablaufprogrammierung werden diese Eingabestellen lediglich im Bedarfsfalle aktiviert. Die Eingabestellen 19, 20, 21 sind für andere Funktionen gesperrt. Alle übrigen Eingabestellen 22 werden über die Programmierung bzw. Konfiguration auf dem Programmier-Bedienfeld von Fall zu Fall für ihre Funktion definiert. Dabei ist es möglich, dass nur die im Ablaufdarstellungsfeld 36 visualisierten Komponenten in den Eingabestellen 22 belegt bzw. definiert werden. Es kann sich dabei um eine, zwei oder mehrere Komponenten oder in sehr einfachen Fällen sogar um alle Komponenten handeln. Es wird ferner vorgeschlagen, dass zumindest die Blöcke 15 und 16 und eventuell 17 vom Maschinenhersteller über eine entsprechende Programmierung belegt werden. Der Block 18 und evtl. 17 kann als Reserve z.B. für den Anwender reserviert werden. Es gibt ferner weitere Eingriffe, welche bei Spritzgiessmaschinen nahezu ausnahmslos benötigt werden. Auch diese Eingabestellen 23 werden fix belegt. Das gleiche gilt für die + (plus)-Taste sowie die - (minus)-Taste 24 um die Parameterwerte zu erhöhen oder zu erniedrigen. Im operativen Bedienfeld befindet sich die Taste auf dem Bildschirm, so dass auf den einzelnen Tasten graphische Symbole oder kleine Filme oder Ablaufsequenzen und Zustände wie Ein / Aus darstellbar sind. Als alternative Mouse-Führung kann als Beispiel das Tastenfeld 19 zwar fix für die Formbewegung belegt sein, jedoch abhängig von der Betriebsart die Funktion ändern:

| | |
|---|---|
| Hand: | Form öffnen/schliessen |
| Automat: | +/-, so dass damit beispielsweise die Formgeschwindigkeit angepasst werden kann |

Die konkrete Auswirkung von +/- kann durch den Bediener konfiguriert werden, mit Auswirkung auf die erste oder zweite Funktion oder auf beide.

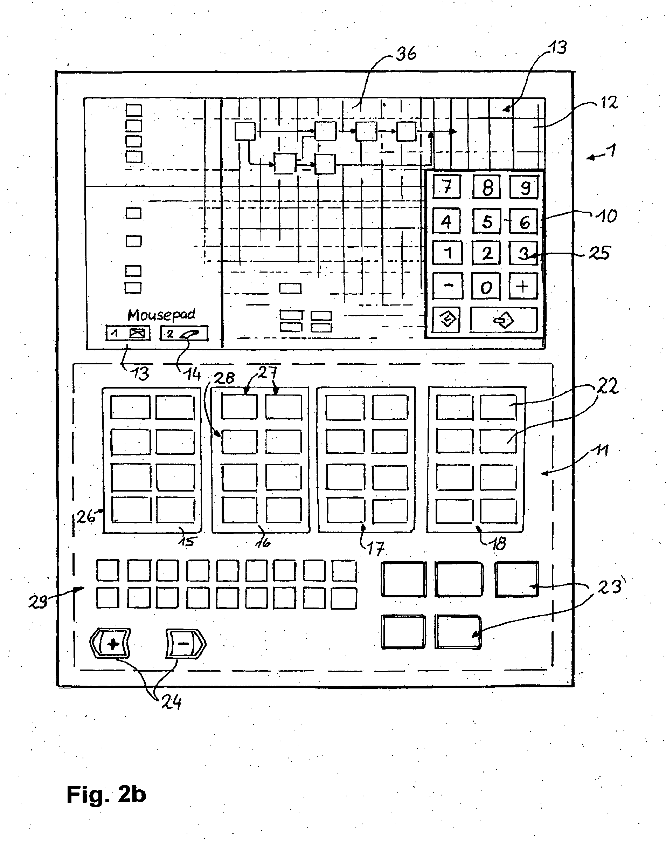

Die Figur 2b zeigt eine weitere Ausgestaltung der Figur 2a. Auf dem Programmier-Bedienfeld 10 ist ein numerisches Eingabefeld 25. Das numerische Eingabefeld wird als Window auf dem Bildschirm dargestellt, primär für die Parametrierung der einzelnen Komponenten. Im operativen Bedienfeld 11 sind sechs weitere Eingabestellen 26, 27, 28 in aktiviertem Zustand dargestellt. Diese Eingabestellen gelten als Beispiele für eine erfindungsgemässe Definition der Eingabestellen, dies auf Grund von im Hintergrund arbeitenden Programmen sowie entsprechender Aktivierung durch die Komponentenwahl bei der Konfiguration auf dem Programmier-Bedienfeld 10. In Ergänzung sind auf dem operativen Bedienfeld 11 weitere fix belegte Tasten 29, welche ebenfalls Grundfunktionen z.B. wie Kühlwasser, Heizungen, Hydrauliksysteme, Stromversorgung, usw. betreffen. Über das numerische Eingabefeld 25 wird zu jedem variablen Prozessfaktor der gewünschte Wert eingegeben.

Eine Tastatur für Schrifttexte kann auf dem Programmier-Bedienfeld vorgesehen werden. Grundsätzlich können alle Eingabestellen in dem operativen Bedienfeld als Touchscreen-Eingabestellen ausgebildet werden. Von der Funktionalität sind es jedoch in erster Linie die Eingabestellen, welche bei einer Mehrfachbenutzung automatisch für die momentane Nutzung programmierbar sind, bzw. welche von der Steuerung automatisch vom Programmier-Bedienfeld geändert werden können.

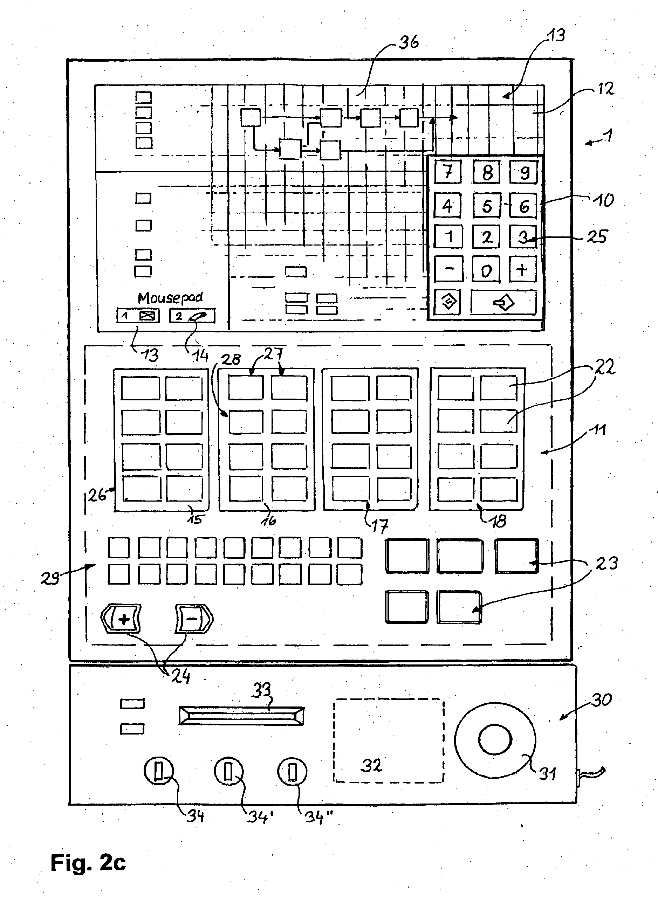

Im untersten Teil der Figur 2c ist ein Zusatzkasten 30, auf dem sich ein Not-Ein-/ Ausschalter 31, ein zusätzlicher Mousepad 32 und ein Schlitz 33 für das Einführen einer Karte für die Bedienererkennung befindet. Die Schlüsselstelle 34 ist ein Betriebsartensperrschalter. 34' und 34" sind weitere Schlüsselschalter.

In vielen Anwendungsfällen ist es wichtig, dass z.B. zwei oder mehrere Eingabestellen bzw. gleichzeitig betätigt werden können, was durch entsprechende Programmierung sichergestellt werden muss. Diese Steuerungsart betrifft vor allem Hilfssteuerungen z.B. für Kernzüge, das Ausstossen oder Ausblasen von Spritzteilen, usw. Diese Eingabestellen sind in dem Bereich der Blöcke 15 bis 18 angeordnet. Die Figur 3 zeigt ein Beispiel für eine neue, noch nicht veröffentlichte Lösung der Anmelderin für eine besondere Bildschirmdarstellung. Es handelt sich um eine vereinfachte Darstellung für einen frei programmierbaren Ablauf eines Spritzzyklus mit Eingabe der Prozessparameter. Der ganze Bildschirm 12 ist in der Figur 3 als Touchscreen ausgebildet. Die Ablauferstellung sowie Parametrierung erfolgen am Bildschirm selbst, mit Blick des Bedieners auf den Bildschirm 12. Es handelt sich dabei um eine virtuelle Prozesserstellung, noch ohne direkten Steuereinfluss auf die Maschinenkomponenten. In der Figur 3 ist auf dem Bildschirm ein Ablaufeditor dargestellt. Die Bedienung der Maschine ist stark vereinfacht, wenn der Maschinenablauf für den Bediener sichtbar ist, die dazu relevanten Informationen auf dem Bildschirm klar erkennbar sind und bei Bedarf geändert werden können. Der visualisierte Maschinenablauf auf der Basis der Spritzgiessmaschinen-Komponenten, wie Formschluss, Aggregat, Ausstosser, etc. lässt sich dabei auch als ordnendes Element für die Parametrierung der einzelnen Kommandos nutzen, mit deren Hilfe die Maschine letztlich gesteuert wird. Die einzelnen Kommandos, wie z.B. "Form schliessen", "Dosieren" oder "Einspritzen" können direkt dargestellt und zur Bearbeitung angeboten werden. Mit dem Ablaufeditor gemäss Bild in Figur 3 kann ein beliebiger Ablauf, beispielsweise der Produktionsablauf, modelliert und die verwendeten Komponenten und Kommandos parametriert werden. Der Ablaufeditor bzw. die Abläufe stehen im Zentrum der Programmierung der Spritzgiessmaschine. Die ganze Parametrierung der Spritzgiessmaschine inkl. der zugeordneten Peripheriegeräte kann über den Ablaufeditor eingesehen und verändert werden. Damit entfällt die heute gängige Aufteilung der Parameter auf eine Vielzahl von Eingabemasken (Bildschirmseiten). Der Ablaufeditor besteht aus vier Bereichen:
▪ Liste aller vorhandenen Abläufe, Ablaufliste 34,
▪ Liste aller physikalisch vorhandenen Komponenten, Komponentenliste 40,
▪ Grafische Darstellung des Ablaufs, Ablaufdarstellungsfeld; 36 und
▪ Eingabemaske für die Parametrierung von Komponenten und Kommandos auf dem Parametrierfeld 37.

Wird ein bestehender Ablauf 38 selektiert, so wird der Ablauf im Ablauf- . darstellungsfeld 36 grafisch visualisiert. Der Benutzer kann nun den selektierten Ablauf verändern, umbenennen, kopieren oder löschen. Um einen neuen Ablauf zu erstellen, kann er in der Ablaufliste die Funktion "Neu" aufrufen. Es besteht die Möglichkeit, aus der Liste der physikalisch vorhandenen Komponenten - im Sinne einer Vorauswahl - diejenigen zu selektieren, die für den neuen Ablauf benötigt werden. Um den eigentlichen Ablauf zu erstellen, selektiert der Benutzer ein Kommando 40 einer Komponente und fügt dieses in den Ablauf ein. Dies wiederholt er solange, bis der Ablauf komplett ist. Wenn der Benutzer ein Kommando im Ablauf selektiert, werden im Parametrierfeld 37 die zugehörigen Kommandoparameter angezeigt und können dort auch eingegeben werden. Ein Kommando kann in einem Ablauf mehrfach verwendet werden. Jede Verwendung (Instanz des Kommandos) hat dabei seine eigene Parametrierung. Im Ablaufdarstellungsfeld 36 können zwischen den Kommandos Synchronisationen 42a, 42b eingefügt und gegebenenfalls auch parametriert werden. Im Weiteren besteht die Möglichkeit, die im Ablauf eingefügten Kommandos und Synchronisationen zu verschieben oder zu löschen oder die zugehörige Parametrierung zu verändern. Innerhalb eines zyklischen Ablaufs sind viele Kommandos symmetrisch, d.h. wenn eine Achse (z.B. ein Ausstosser) vorgefahren wird, muss sie irgendwann auch wieder zurückgefahren werden.

Im Weiteren besteht die Möglichkeit, bestehende Abläufe als Makro in anderen Abläufen zu verwenden. Dazu wird der bestehende Ablauf wie ein Kommando als Makro in einen weiteren Ablauf eingefügt. Das Makro kann auf dem Bildschirm 12 expandiert werden, um z.B. die Parametrierung anzupassen. Die Erstellung eines Ablaufs auf der Basis der vorhandenen Komponenten und deren Kommandos unterliegt keinen Einschränkungen. Der Benutzer wird jedoch im Rahmen einer Plausibilitätsprüfung auf potentielle Fehler im Ablauf hingewiesen. Wenn z.B. der Ausstosser bei geschlossenem Werkzeug vorfahren soll, so muss dies durch den Benutzer bestätigt werden. Das Parametrierfeld 37 zeigt mit der Eingabestelle 41 an, wie vielen Stufen beim Beispiel der Formöffnung beteiligt sind. Die Parametrierung wird bei den Eingabestellen 43 bis 46 angezeigt, wobei die Eingabestellen 43, 46 die Geschwindigkeit in % einer maximalen Geschwindigkeit anzeigen. Die Eingabestellen 44 und 45 zeigen den Weg an. Die Zahlenwerte können z.B. über die numerische Tastatur oder eine Eingabestelle +/- des operativen Bedienfeldes geändert werden (Figur 2).

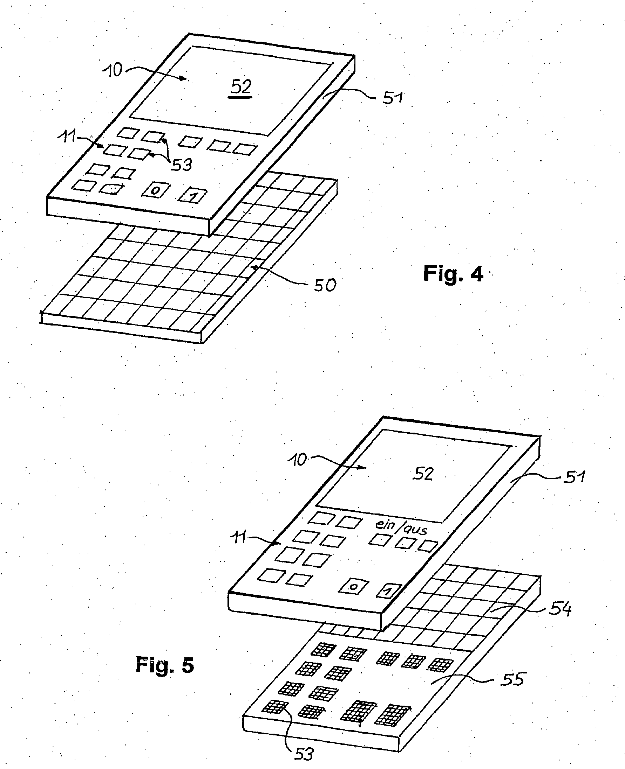

Die Figuren 4 und 5 zeigen zwei Beispiele für die konkrete Ausgestaltung des Programmier-Bedienfeldes und des operativen Bedienfeldes 10 bzw. 11. Die Figur 4 zeigt eine Lösung mit einem Bildschirm 50, auf dem ganzflächig eine Touchfolie angebracht ist. Über den Bildschirm ist in Explosionsdarstellung eine Maske 51 mit einem oberen grossen Ausschnitt 52 dargestellt. Der Ausschnitt 52 ist das Programmier-Bedienfeld. Die untere Hälfte der Maske 51 weist einzelne Ausschnitte 53 auf. Der Touchscreen muss auf der ganzen Fläche koordinatenbezogen programmierbar sein, so dass sowohl im Programmier-Bedienfeld wie auch im operativen Bedienfeld eine fehlerfreie Zuordnung der Eingabestellen besteht. Die Maske kann z.B. als dünne Metall- oder Kunststoffplatte oder geprägte Folie ausgebildet sein. Dadurch entsteht durch die Ausschnitte 52 und der darunter liegenden Touchfolie ein spürbarer Rand. Dieser Rand gestattet auch ein "blindes" Erfühlen der Eingabestelle, im Sinne einer Schreibmaschinentastatur. Bei dem Beispiel gemäss Figur 4 können die Tasten 53 nicht gleichzeitig betätigt werden.

Bei der Figur 5 ist das operative Bedienfeld mit Einzeltasten als Eingabestelle ausgebildet. Das operative Bedienfeld ist sektorbezogen programmierbar. Jede Eingabestelle 53 ist mit entsprechend sensitivem Belag und entsprechender Datenverbindung mit dem Programmier-Bedienfeld für einen Datenaustausch in beiden Richtungen ausgebildet. Gemäss der Figur 5 ist der obere Teil ein an sich bekannter Touchscreen-Bildschirm 54; der ganze untere Bildschirm 55 ist nur sektorweise in dem Bereich der Eingabestelle als Einzeltastatur ausgebildet. Bei dem Beispiel gemäss Figur 5 können zwei oder mehrere Tasten 53 gleichzeitig betätigt werden.

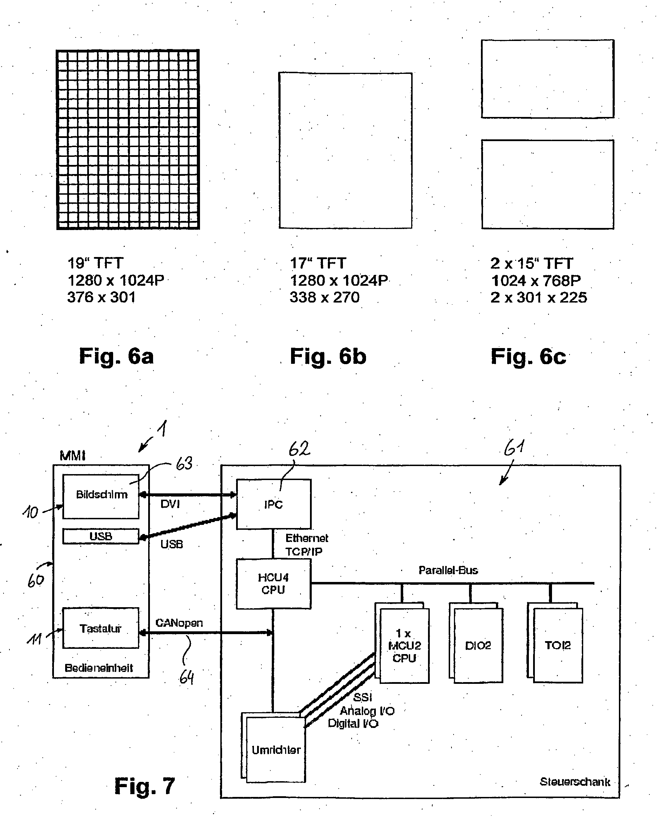

Die Figuren 6a bis 6c zeigen schematisch verschiedene Möglichkeiten der Anordnung des Programmier-Bedienfeldes und des operativen Bedienfeldes auf einem Bildschirm (Figuren 6a und 6b) sowie auf zwei unabhängigen Bildschirmen (Figur 6c).

Die Figur 7 zeigt schematisch ein Beispiel für eine ganze Steuerung, z.B. für eine Spritzgiessmaschine oder Druckgiessmaschine. Links im Bild ist die Bedieneinheit 60. Rechts im Bild sind die elektrischen Komponenten, welche in einem Steuerschrank 61 untergebracht sind. Kopf der Steuerung ist ein Industrie-PC (IPC) 62, der direkt mit dem Bildschirm 63 sowie einer USB-Schnittstelle verbunden ist. Wenn in speziellen Anwendungen auf dem operativen Bedienfeld 11 mehr als eine Eingabestelle gleichzeitig betätigt werden muss, wird vom operativen Bedienfeld 11 eine zusätzliche Datenverbindung 64 vorgesehen.

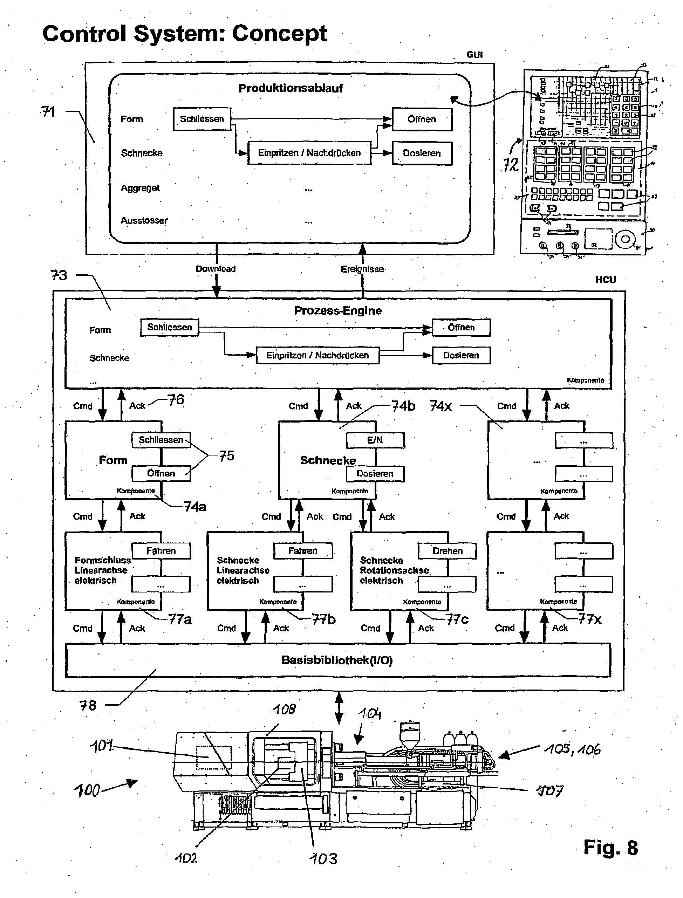

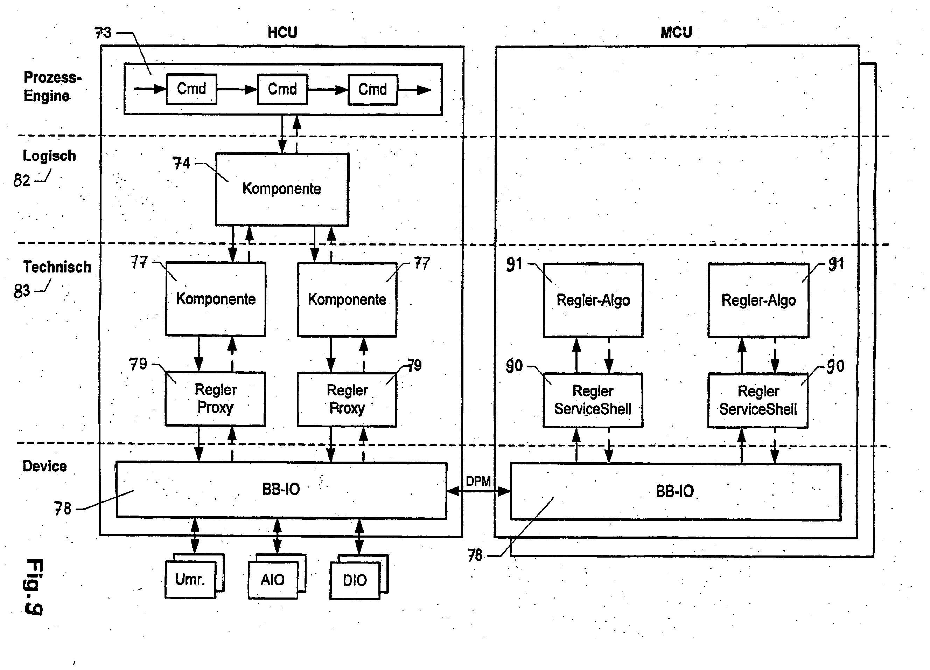

Die Figuren 8 und 9 zeigen ein Schema für ein ganzes Kontrollsystem für eine Spritzgiessmaschine. Das der Steuerung zu Grunde liegende Systemmodell gemäss Figuren 8 und 9 betrachtet die Maschine als Verbund von kooperierenden Komponenten. Eine Komponente 74a, 74b, 74x oder 77a-x verkörpert dabei jedes beliebige Element der Spritzgiessmaschine, sowohl auf logischer als auch auf physikalischer Ebene, einschliesslich der dieser möglicherweise zugeordneten Peripheriegeräte. Auf der Basis der an der Maschine vorhandenen Komponenten erstellt der Benutzer an der Bedieneinheit 72 bzw. am Bedienerterminal 71 Maschinenabläufe. Um einen Maschinenablauf auszuführen, wird dieser von der Steuerung in die Prozess-Engine geladen. Die Prozess-Engine 73 treibt nun den Ablauf, d.h. sie ruft auf den involvierten Komponenten 74 die Kommandos 75 gemäss dem geladenen Maschinenablauf auf. Wenn eine Komponente ein Kommando ausgeführt hat, wird dies dem Aufrufer des Kommandos signalisiert 76. Die Prozess-Engine 73 ruft auf den Komponenten die Kommandos gemäss dem Produktionsablauf auf. Die Prozess-Engine ruft beispielsweise auf der Komponente "Form" 74a das Kommando "Schliessen" auf. Die Form-Komponente wiederum ruft darauf auf der elektrischen Linearachse "Formschluss" 77a das Kommando "Fahren" auf. Über die Basisbibliothek 78 gelangt der Fahrauftrag an den Regler 79 bzw. 90 (Figur 9), der die Bewegung der Achse gemäss dem vorgegebenen Fahrprofil regelt. Hat die Achse ihr Ziel erreicht, signalisiert dies der Regler der Linearachs-Komponente 77a. Diese signalisiert darauf der Form-Komponente 74a das Ende des Fahrkommandos, und zum Schluss signalisiert die Form-Komponente der Prozess-Engine 73 das Ende des Schliesskommandos. Da es sich um ein reaktives ereignisgetriebenes System handelt, sind Kommandoaufrufe nicht blockierend, und es können quasi gleichzeitig mehrere Kommandos auf unterschiedlichen Komponenten angestossen werden. Beispielsweise läuft das "Dosieren" parallel zum "Öffnen" und wieder "Schliessen" der Form. Die Koordination und Synchronisation übernimmt dabei die Prozess-Engine 73. In der Steuerung wird zwischen Komponenten 74, 82 auf logischer und solchen auf technischer 77, 83 Ebene unterschieden. Logische Komponenten 74 repräsentieren eine Funktionseinheit der Spritzgiessmaschine bzw. der Produktionszelle, beispielsweise die Formschlusseinheit (kurz Form) 74a, die Dosier- und Spritzeinheit (kurz Schnecke) 74b etc. Eine logische Komponente kann aus mehreren Achsen bestehen. Beispielsweise besteht die Dosier- und Spritzeinheit 74b aus einer Linear- 77b und einer Rotationsachse 74c. Eine technische Komponente 77 repräsentiert eine Achse. Sie sorgt dafür, dass die Antriebstechnologie einfach ausgetauscht werden kann, indem sie die Antriebstechnologie kapselt. Damit hat ein Wechsel der Antriebstechnologie keinen Einfluss auf die logischen Komponenten oder auf die konfigurierten Maschinenabläufe. Die physisch realen Komponenten sind unten in Figur 8 symbolisch mit dem Bild einer Spritzgiessmaschine 100 dargestellt. Von der Vielzahl der Einzelkomponenten "X" sind nur die folgenden angedeutet: Antrieb bzw. Achse, Formbewegung 101, Ausstosser 102, bewegliche Form bzw. Werkzeug 103, Schnecke 104, Linearantrieb der Schnecke (Linearachse) 105 und Rotationsantrieb der Schnecke (Rotationsachse) 106, Aggregat 107, Schutzverdeck 108.

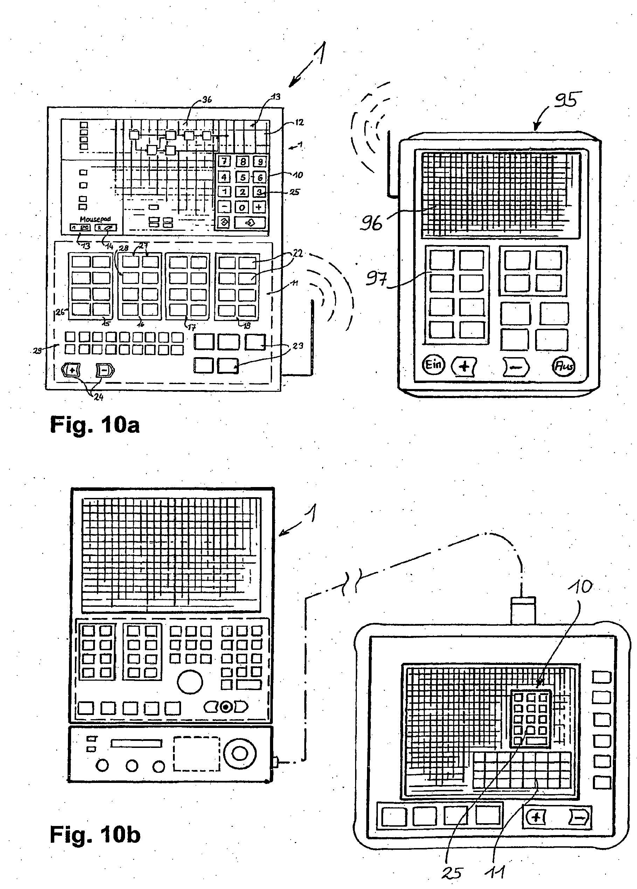

Die Figuren 10a und 10b zeigen zwei Möglichkeiten der Fernbedienung. Bei der Figur 10a ist der ortsfesten Bedieneinheit ein mobiles Handsteuergerät 95 zugeordnet, das vorteilhafterweise über Funk mit der ortsfesten Bedieneinheit im Datenaustausch für beide Richtungen steht. Das mobile Handsteuergerät weist einen Kleinbildschirm 96 auf. Beide Bedienfelder 96, 97 des Handsteuergerätes 95 sind analog zu der ortsfesten Bedieneroberfläche der Bedieneinheit 1 konzipiert. Beim Handsteuergerät wäre die Programmierung des Prozessablaufes nicht bequem, da die Bedieneroberfläche zu klein wäre. Dagegen ist die Bedieneroberfläche gross genug für operative Eingriffe an der Maschine. Das Handsteuergerät hat dazu den grossen Vorteil, dass dieses in die Nähe des Ortes gebracht werden kann, wo Einfluss genommen werden muss. Primär handelt es sich dabei um Bewegungsbefehle. Entsprechend vereinfacht kann beim Handsteuergerät das Bedienfeld konzipiert sein. Die beiden Bedieneinheiten können momentan gegenseitig gesperrt werden, so dass Fehleingaben vermieden werden.

Die Figur 10b zeigt eine Kombination einer festen Bedieneroberfläche mit einem Handbediengerät in der Art eines Laptops bzw. Notebookes. Ein solches Gerät kann nicht ohne weiteres in einer Hand gehalten und z.B. stehend bedient werden. Es hat jedoch den Vorteil eines relativ grossen Bildschirmes. Der Laptop eignet sich insbesondere für die Ablaufprogrammierung, welche z.B. sitzend in Maschinennähe durchgeführt werden kann. Zumindest das Einrichten eines neuen Werkzeuges kann ebenfalls über einen Laptop begleitet werden. Beim Laptop kann das operative Bedienfeld gleich oder ähnlich konzipiert sein wie das operative Bedienfeld der ortsfesten Bedieneroberfläche. Die Verbindung mit der Bedieneinheit 1 kann über Draht oder drahtlos erfolgen. Vorzugsweise wird den Bildschirmeingabestellen bzw. -tasten, insbesondere auf dem operativen Bedienfeld ein taktiler Feedback zugeordnet. Es gibt verschiedene Möglichkeiten, das taktile Feedback zu erzeugen:
- Optisch wird ein Feedback ohnehin realisiert, genügt aber nicht für Handsteuertasten
- Akustischer Feedback ist wegen lärmiger Umgebung nicht überall geeignet
- Vibration durch Piezofolien
- Vibration durch Motor mit Exzenter (wie Handy)
- Mechanische Verschiebe-Impulse durch Zugmagnet
- Prinzip Schlagbohrmaschine (Feder/Masse-Klopfer)

Die taktile Signatur muss sich von der Vibration durch die Maschine deutlich unterscheiden. Das taktile Feedback kann für alle Tasten gleichzeitig realisiert werden. Dabei wird das Klicken der Knackfrösche simuliert durch eine kurze Impulsserie von ca. 0,1 bis 0,3 s Dauer. Dies kann z.B. mit einem kleinen Gleichstrommotor sehr effizient erledigt werden. Auf seiner Achse befindet sich ein Sägezahnritzel, das bei der Drehung über die Zahnflanken ein kleines Gewicht aufzieht und mit Federkraft auf die Scheibe zurückfallen lässt. Über die Drehzahl und die Dauer lässt sich ein optimales Feedback einstellen. Die neue Lösung gestattet mit einem Komfort für die verschiedensten Bedienungsarten, der bisher nicht möglich war, wie für die:
- Fernwartung,
- Fernbedienung,
- mobile Zweitbedienung z.B. auf einem fahrbaren Wagen.

Insbesondere kann die Ablaufprogrammierung sowie die Parametrierung als Hilfsstellung des Herstellers an den Anwender auf beliebige Distanz z.B. über Internet unterstützt werden. Auch hier gilt die allgemeine Regel der neuen Erfindung: Alles was auf dem Bildschirm (Bedienfeld 1) ist, kann auf dem Bildschirm, also auch auf Distanz gemacht werden. Ein gleiches gilt für das Bedienfeld 2 in Bezug auf das Tastendesign. Dieses kann in Grösse, Form und Art beliebig gestaltet werden. Insbesondere auf dem Programmier- Bildschirmbedienfeld können im Sinne des Windows-Konzeptes einzelne Felder für die Bedienung ausschnittvergrössert werden.

## Patentansprüche

1. Steuervorrichtung für das Steuern einer oder mehrerer Maschinen oder einer Produktionszelle mit zyklisch repetierbaren Abläufen
- mit einer Maschinensteuerung sowie
- einer Bedieneinheit (1), ausgebildet als Mensch-Maschinen-Interface (MMI),
wobei
-- die Maschinenabläufe und Produktionsparameter an der Bedieneinheit durch den Menschen bzw. Bediener bildschirmunterstützt an Eingabestellen eingebbar und veränderbar sind,
-- die Bedieneinheit wenigstens ein Programmier-Bedienfeld (10) zur Ablaufprogrammierung und ein operatives Bedienfeld (11) zur Eingabe mit Blick auf die Produktionsmaschine aufweisen,
**dadurch gekennzeichnet, dass**
-- im operativen Bedienfeld (11) sicht- und erfühlbare Touchscreen-Eingabestellen (19, 20, 21, 22) vorgesehen sind, die durch Anbringen einer profilbildenden Maske (51) über einem Touchscreen gebildet sind,
-- zumindest ein Teil der Touchscreen-Eingabestellen (19, 20, 21, 22) des operativen Bedienfeldes (11) für ihre Funktion in Abhängigkeit der Eingaben des Programmier-Bedienfeldes (10) programmierbar sind,
-- und das Programmier-Bedienfeld (10) und das operative Bedienfeld (11) für einen programmierten Datenaustausch in beiden Richtungen ausgebildet sind.

2. Steuervorrichtung nach Anspruch 1,
**dadurch gekennzeichnet,**
**dass** das operative Bedienfeld (11) sichtbare und über geprägte Merkmale erfühlbare Touchscreen-Eingabestellen aufweist.

3. Steuervorrichtung nach Anspruch 1 oder 2,
**dadurch gekennzeichnet,**
**dass** das Programmier-Bedienfeld (10) Touchscreen-Eingabestellen für die Ablaufprogrammierung und das operative Bedienfeld (11) Touchscreen-Eingabestellen für die operativen Eingriffe aufweist, wobei das Programmier-Bedienfeld (10) und das operative Bedienfeld (11) für einen programmierten Datenaustausch in beiden Richtungen ausgebildet sind.

4. Steuervorrichtung nach einem der Ansprüche 1 bis 3,
**dadurch gekennzeichnet,**
**dass** das operative Bedienfeld (11) eine beschränkte Zahl von Touchscreen-Eingabestellen aufweist und ein Teil der Touchscreen-Eingabestellen des operativen Bedienfeldes (11) aufgrund entsprechender Programmierung für unterschiedliche Funktionen oder mehrfach benutzbar ist, wobei die je aktivierte Funktion automatisch an den Touchscreen-Eingabestellen des operativen Bedienfeldes (11) anzeigbar ist.

5. Steuervorrichtung nach einem der Ansprüche 1 bis 14,
**dadurch gekennzeichnet,**
**dass** die Maschine eine Spritzgiessmaschine (100) oder Druckgiessmaschine ist.

6. Steuervorrichtung nach einem der Ansprüche 1 bis 5,
**dadurch gekennzeichnet,**
**dass** die Touchscreen-Eingabestellen im Programmier-Bedienfeld (10) koordinatenbezogen und die Touchscreen-Eingabestellen (19, 20, 21, 22) des operativen Bedienfeldes (11) sektorbezogen programmierbar sind.

7. Steuervorrichtung nach einem der Ansprüche 1 bis 6,
**dadurch gekennzeichnet,**
**dass** auf dem Bildschirm des Programmier-Bedienfeldes (10) eine profilbildende Maske (51) darstellbar ist, derart, dass auf der Bedieneroberfläche des Programmier-Bedienfeldes (10) der Ablauf und die Parametrierung konfigurierbar und parametrierbar ist, wobei die profilbildende Maske (51) ein Ablaufdarstellungsfeld (36), eine Komponentenliste der steuerbaren Maschinenkomponenten mit auswählbaren Kommandos, ferner ein Parametrierfeld (37) aufweist.

8. Steuervorrichtung nach einem der Ansprüche 1 bis 7,
**dadurch gekennzeichnet,**
**dass** die jeweils erforderlichen sicht- und erfühlbaren Touchscreen-Eingabestellen durch die Anwahl der Komponentenschematas oder der Parameteranzeigen auf dem Bildschirm automatisch mit den entsprechenden dafür notwendigen Funktionsverbindungen für die sicht- und erfühlbaren Touchscreen-Eingabestellen (19, 20, 21, 22) zuschalt- und aktivierbar sind.

9. Steuervorrichtung nach einem der Ansprüche 1 bis 8,
**dadurch gekennzeichnet,**
**dass** für die Touchscreenfunktion eine Steuerung vorgesehen ist, über welche automatisch die aktivierbaren sicht- und erfühlbaren Touchscreen-Eingabestellen (19, 20, 21, 22) mit den entsprechenden Symbolen aufzeigbar und beleuchtbar sind.

10. Steuervorrichtung nach einem der Ansprüche 1 bis 9,
**dadurch gekennzeichnet,**
**dass** die sicht- und erfühlbaren Touchscreen-Eingabestellen (19, 20, 21, 22) wenigstens eine dreifache Funktion aufweisen:
- eine Leuchtanzeige als Statusanzeige,
- Anzeigen eines Symboles in Bezug auf die durch die Tasten auszulösende Funktion bzw. die Bedeutung der Tastenfunktion,
- als Steuereingabe und Steuerbefehl für eine Aktivierung von Maschinenabläufen und / oder Änderung von Produktionsparametern.

11. Steuervorrichtung nach einem der Ansprüche 1 bis 10,
**dadurch gekennzeichnet,**
**dass** den Touchscreen-Eingabestellen (19, 20, 21, 22) ein taktiler Feedback zugeordnet ist zur sensorischen Bestätigung, dass der Steuerbefehl tatsächlich eingegeben bzw. akzeptiert wird, wobei der taktile Feedback einzelnen Tasten oder einzelnen Bildschirmbedienfeldern oder einer ganzen Eingabeeinheit zugeordnet ist.

12. Steuervorrichtung nach einem der Ansprüche 1 bis 11,
**dadurch gekennzeichnet,**
**dass** Touchscreenfelder innerhalb einer Bildschirmfläche angeordnet sind, die durch das Anbringen einer profilbildenden Maske (51) gebildet sind.

13. Steuervorrichtung nach Anspruch 12,
**dadurch gekennzeichnet,**
**dass** die profilbildende Maske (51) sich über die ganze Bildschirmfläche erstreckt, wobei zumindest ein Teil des Touchscreenfeldes für die sichtbaren Touchscreen-Eingabestellen (19, 20, 21, 22) als unbedecktes Fenster oder als durchsichtige Schicht ausgebildet ist.

14. Steuervorrichtung nach einem der Ansprüche 12 oder 13,
**dadurch gekennzeichnet,**
**dass** sich die profilbildende Maske (51) nur über das operative Bedienfeld (11) erstreckt und in dem Bereich der einzelnen Eingabestellen Öffnungen aufweist, welche durch Ausstanzen und / oder durch eine Klarsichtfolie gebildet sind und der Öffnungsbereich um eine Tastfläche geprägte Merkmale, wie Ränder oder Erhebungen, aufweist.

15. Steuervorrichtung nach einem der Ansprüche 1 bis 14,
**dadurch gekennzeichnet,**
**dass** die Funktionen oderzumindest Teilfunktionen des operativen Bedienfeldes (11) dupliziert in einem zugehörigen, mobilen Handsteuergerät (95) ausgebildet ist.

16. Steuervorrichtung nach Anspruch 15,
**dadurch gekennzeichnet,**
**dass** das operative Bedienfeld (11) ortsfest angeordnet ist und als Zusatz das mobile Handsteuergerät (95) für die Bedienung sperrbar ist und / oder dass bei Bedienung über das mobile Handsteuergerät (95) das ortsfest operative Bedienfeld (11) sperrbar ist.

17. Steuervorrichtung nach Anspruch 15 oder 16,
**dadurch gekennzeichnet,**
**dass** das mobile Handsteuergerät (95) beispielsweise ein Handy mit Bildschirm, ein PDA, ein Smart-phone oder ein Laptop (95) ist und der Datenaustausch über Draht (99) oder drahtlos oder über Funk oder IR oder IrDA oder Bluetooth, oder Wireless USB oder WLAN erfolgt.

## Claims

1. A control device for controlling one or several machines or a production cell with cyclically repeatable sequences
- with a machine control and
- a control unit (1), embodied as a man-machine interface (MMI),
wherein
-- the machine sequences and production parameters are able to be inputted and modified at the control unit by the person or respectively operator in a screen-assisted manner at input points,
-- the control unit has at least one programming control panel (10) for the sequence programming and an operative control panel (11) for input with a view to the production machine,
**characterized in that**
-- in the operative control panel (11) visible and feelable touchscreen input points (19, 20, 21, 22) are provided, which are formed by the application of a profile-forming mask (51) over a touchscreen,
-- at least one part of the touchscreen input points (19, 20, 21, 22) of the operative control panel (11) are programmable for their function depending on the inputs of the programming control panel (10),
-- and the programming control panel (10) and the operative control panel (11) are configured for a programmed data exchange in both directions.

2. The control device according to claim 1,
**characterized in**
**that** the operative control panel (11) has touchscreen input points which are visible and are able to be felt by means of embossed features.

3. The control device according to claim 1 or 2,
**characterized in**
**that** the programming control panel (10) has touchscreen input points for the sequence programming and the operative control panel (11) has touchscreen input points for the operative interventions, wherein the programming control panel (10) and the operative control panel (11) are configured for a programmed data exchange in both directions.

4. The control device according to one of claims 1 to 3,
**characterized in**
**that** the operative control panel (11) has a limited number of touchscreen input points and a portion of the touchscreen input points of the operative control panel (11) is able to be used for different functions or in a multiple manner on the basis of corresponding programming, wherein the function which is activated in each case is able to be displayed automatically on the touchscreen input points of the operating control panel (11).

5. The control device according to one of claims 1 to 14,
**characterized in**
**that** the machine is an injection moulding machine (100) or die casting machine.

6. The control device according to one of claims 1 to 5,
**characterized in**
**that** the touchscreen input points in the programming control panel (10) are programmable in a coordinate-related manner and the touchscreen input points (19, 20, 21, 22) of the operative control panel (11) are programmable in a sector-related manner.

7. The control device according to one of claims 1 to 6,
**characterized in**
**that** on the screen of the programming control panel (10) a profile-forming mask (51) is able to be presented, such that on the operator surface of the programming control panel (10) the sequence and the parameterisation is able to be configured and parameterised, wherein the profile-forming mask (51) has a sequence display area (36), a component list of the controllable machine components with selectable commands, and in addition a parameterisation area (37).

8. The control device according to one of claims 1 to 7,
**characterized in**
**that** the respectively necessary visible and feelable touchscreen input points are able to be switched on and activated by the selection of the component scheme or the parameter displays on the screen automatically with the corresponding functional connections necessary for this for the visible and feelable touchscreen input points (19, 20, 21, 22).

9. The control device according to one of claims 1 to 8,
**characterized in**
**that** for the touchscreen function, a control is provided via which automatically the activatable visible and feelable touchscreen input points (19, 20, 21, 22) are able to be displayed and illuminated with the corresponding symbols.

10. The control device according to one of claims 1 to 9,
**characterized in**
**that** the visible and feelable touchscreen input points (19, 20, 21, 22) have at least a triple function:
- an illuminated display as status display,
- displaying a symbol with respect to the function to be activated by the keys or respectively the meaning of the key function,
- as a control input and control command for an activation of machine sequences and/or modification of production parameters.

11. The control device according to one of claims 1 to 10,
**characterized in**
**that** a tactile feedback is associated with the touchscreen input points (19, 20, 21, 22) for sensory confirmation that the control command is actually inputted or respectively accepted, wherein the tactile feedback is associated with individual keys or individual screen operating panels or with a whole input unit.

12. The control device according to one of claims 1 to 11,
**characterized in**
**that** touchscreen panels are arranged within a screen area, which are formed by the arranging of a profile-forming mask (51).

13. The control device according to claim 12,
**characterized in**
**that** the profile-forming mask (51) extends over the entire screen area, wherein at least a portion of the touchscreen panel for the visible touchscreen input points (19, 20, 21, 22) is configured as an uncovered window or as a transparent layer.

14. The control device according to one of claims 12 or 13,
**characterized in**
**that** the profile-forming mask (51) extends only over the operative control panel (11) and has openings in the region of the individual input points, which are formed by stamping out and/or by a transparent film, and the opening region around a key area has embossed features such as edges or elevations.

15. The control device according to one of claims 1 to 14,
**characterized in**
**that** the functions or at least partial functions of the operative control panel (11) are configured in a duplicated manner in an associated mobile manual control unit (95).

16. The control device according to claim 15,
**characterized in**
**that** the operative control panel (11) is arranged so as to be stationary, and as an accessory the mobile manual control unit (95) is able to be blocked for operation and/or that with operation via the mobile manual control unit (95) the stationary operative control panel (11) is able to be blocked.

17. The control device according to claim 15 or 16,
**characterized in**
**that** the mobile manual control unit (95) is, for example, a mobile phone with a screen, a PDA, a smartphone or a laptop (95), and the data exchange takes place by wire (99) or wirelessly or by radio or IR or IrDA or Bluetooth, or wireless USB or WLAN.

## Revendications

1. Dispositif de pilotage pour piloter une ou plusieurs machine(s) ou une cellule de production avec des séquences pouvant être répétées de manière cyclique
- comprenant un pilotage de machine ainsi
- qu'une unité de commande (1), conçue en tant qu'Interface-Homme-Machine (MMI), dans lequel
-- les séquences de machine et les paramètres de production sur l'unité de commande peuvent être saisis et modifiés sur des emplacements de saisie par l'humain, respectivement l'utilisateur à l'aide d'un écran,
-- l'unité de commande présente au moins un panneau de commande de programmation (10) pour la programmation des séquences et un panneau de commande opérationnel (11) pour la saisie en visualisant la machine de production,
**caractérisé en ce que**
-- dans le panneau de commande opérationnel (11), des emplacements de saisie d'écran tactile (19, 20, 21, 22) visibles et tactiles sont prévus qui sont formés en appliquant un masque (51) formant un profil sur un écran tactile,
-- au moins une partie des emplacements de saisie d'écran tactile (19, 20, 21, 22) du panneau de commande opérationnel (11) peuvent être programmés pour leur fonction selon les saisies du panneau de commande de programmation (101),
-- et le panneau de commande de programmation (101) et le panneau de commande opérationnel (11) sont conçus pour un échange de données programmé dans les deux sens.

2. Dispositif de commande selon la revendication 1,
**caractérisé en ce**
**que** le panneau de commande opérationnel (11) présente des espaces de saisie par écran tactile visibles et sensibles au toucher par des attributs gravés.

3. Dispositif de commande selon la revendication 1 ou 2,
**caractérisé en ce**
**que** le panneau de commande de programmation (10) présente des espaces de saisie par écran tactile pour la programmation des opérations et le panneau de commande opérationnel (11) présente des espaces de saisie par écran tactile pour les interventions opérationnelles, sachant que le panneau de commande de programmation (10) et le panneau de commande opérationnel (11) sont conçus pour un échange de données programmé dans les deux sens.

4. Dispositif de commande selon l'une des revendications 1 à 3,
**caractérisé en ce**
**que** le panneau de commande opérationnel (11) présente un nombre limité d'espaces de saisie par écran tactile et une partie des espaces de saisie par écran tactile du panneau de commande opérationnel (11) peuvent être utilisés pour diverses fonctions ou plusieurs fois du fait de la programmation correspondante, sachant que la fonction activée peut être affichée automatiquement sur les espaces de saisie par écran tactile du panneau de commande opérationnel (11) .

5. Dispositif de commande selon l'une des revendications 1 à 4,
**caractérisé en ce**
**que** la machine est une machine de moulage par injection (100) ou une machine de moulage sous pression.

6. Dispositif de commande selon l'une des revendications 1 à 5,
**caractérisé en ce**
**que** les espaces de saisie par écran tactile dans le panneau de commande de programmation (10) peuvent être programmés par rapport aux coordonnées et les espaces de saisie par écran tactile (19, 20, 21, 22) du panneau de commande opérationnel (11) peuvent être programmés par rapport aux secteurs.

7. Dispositif de commande selon l'une des revendications 1 à 6,
**caractérisé en ce**
**qu'**un masque formant profilés (51) peut être visualisé sur l'écran du panneau de commande de programmation (10), de telle sorte que l'opération et le paramétrage peuvent être configurés et paramétrés sur l'interface utilisateur du panneau de commande de programmation (10), sachant que le masque formant profilés (51) présente un panneau visualisant les opérations (36), une liste de composantes des composantes de la machine pouvant être commandées avec des commandes pouvant être sélectionnées, et un panneau de paramétrage (37) en plus.

8. Dispositif de commande selon l'une des revendications 1 à 7,
**caractérisé en ce**
**que** les espaces de saisie par écran tactile visibles et sensibles au toucher respectivement nécessaires, peuvent être activés en sélectionnant les schémas de composantes ou les paramètres affichés à l'écran automatiquement avec les liaisons fonctionnelles nécessaires correspondantes pour les espaces de saisie par écran tactile (19, 20, 21, 22) visibles et sensibles au toucher.

9. Dispositif de commande selon l'une des revendications 1 à 8,
**caractérisé en ce**
**qu'**une commande est prévue pour la fonction écran tactile, par le biais de laquelle les espaces de saisie par écran tactile (19, 20, 21, 22) visibles et sensibles au toucher pouvant être activés, peuvent être affichés et éclairés avec les symboles correspondants.

10. Dispositif de commande selon l'une des revendications 1 à 9,
**caractérisé en ce**
**que** les espaces de saisie par écran tactile (19, 20, 21, 22) visibles et sensibles au toucher présentent au moins une fonction triple :
- un affichage lumineux en tant qu'affichage du statut,
- l'affichage d'un symbole en rapport avec la fonction à déclencher par les touches, respectivement, la signification de la fonction tactile,
- en tant que saisie de commande et instruction de commande pour une activation d'opérations de la machine et/ou une modification de paramètres de production.

11. Dispositif de commande selon l'une des revendications 1 à 10,
**caractérisé en ce**
**qu'**un retour tactile est attribué aux espaces de saisie par écran tactile (19, 20, 21, 22) pour la confirmation sensorielle que l'instruction de commande est donnée, respectivement acceptée effectivement, sachant que le retour tactile est attribué à différentes touches ou différents panneaux de commande d'écran ou à une unité de saisie complète.

12. Dispositif de commande selon l'une des revendications 1 à 11,
**caractérisé en ce**
**que** des panneaux d'écran tactile sont disposés à l'intérieur d'une surface d'écran, lesquels sont formés par l'application d'un masque formant profilés (51).

13. Dispositif de commande selon la revendication 12,
**caractérisé en ce**
**que** le masque formant profilés (51) s'étend sur toute la surface d'écran, sachant qu'au moins une partie du panneau d'écran tactile pour les espaces de saisie par écran tactile (19, 20, 21, 22) visibles est conçue en tant que fenêtre non masquée ou couche transparente.

14. Dispositif de commande selon la revendication 12 ou 13,
**caractérisé en ce**
**que** le masque formant profilés (51) s'étend uniquement sur le panneau de commande opérationnel (11) et présente des ouvertures au niveau des différents espaces de saisie, qui sont formées par matriçage et/ou par un film transparent et la zone d'ouverture autour d'une surface tactile présente des attributs gravés, comme des bords ou des bossages.

15. Dispositif de commande selon l'une des revendications 1 à 14,
**caractérisé en ce**
**que** les fonctions ou du moins des fonctions partielles du panneau de commande opérationnel (11) sont dupliquées dans un appareil de commande manuel mobile (95) correspondant.

16. Dispositif de commande selon la revendication 15,
**caractérisé en ce**
**que** le panneau de commande opérationnel (11) est disposé de façon stationnaire et l'appareil de commande manuel mobile (95) peut être verrouillé en plus pour l'utilisation et/ou que le panneau de commande opérationnel (11) stationnaire peut être verrouillé en cas d'utilisation via l'appareil de commande manuel mobile (95).

17. Dispositif de commande selon la revendication 15 ou 16,
**caractérisé en ce**
**que** l'appareil de commande manuel mobile (95) est par exemple un téléphone portable avec écran, un PDA, un Smartphone ou un ordinateur portable (95) et l'échange de données est filaire (99) ou a lieu sans fil ou par radio ou IR ou IrDA ou Bluetooth, ou bien Wireless USB ou WLAN.
